# EUROPÄISCHE PATENTSCHRIFT

(11) **EP 2 710 941 B1**
(45) Veröffentlichungstag und Bekanntmachung des Hinweises auf die Patenterteilung: **08.07.2015**
(21) Anmeldenummer: 12185093.7
(22) Anmeldetag: 19.09.2012
(51) Int. Cl.: A47J 36/28, A45D 34/04, B65D 81/00, A61F 7/03

(54) **Transportable Vorrichtung zum Erhitzen von Lebensmitteln**
Transportable apparatus for heating food
Dispositif transportable destiné à chauffer des aliments

(43) Veröffentlichungstag der Anmeldung: 26.03.2014
(73) Patentinhaber: Arnold, Uwe, 67069 Ludwigshafen (DE)
(72) Erfinder: Arnold, Uwe, 67069 Ludwigshafen (DE)
(74) Vertreter: Zenz Patentanwälte Partnerschaft mbB

(56) Entgegenhaltungen:
- DE-A1-102008 015 677
- DE-U1-202010 015 079

## Beschreibung

Die Erfindung betrifft eine transportable Vorrichtung zum Erhitzen von Lebensmitteln, die einen Behälter zum Aufnehmen der Lebensmittel und einen an den Behälter angrenzenden Erhitzungsraum aufweist, der über eine gemeinsame wärmeleitende Wandung mit dem Behälter thermisch gekoppelt und zugleich von diesem getrennt ist und der eine Stoffmischung enthält, die bei Zufuhr von Wasser in einer exothermen chemischen Reaktion Wärme erzeugt.

Beispielsweise ist aus der Patentschrift EP 1 126 004 B1 eine Stoffmischung bekannt, die Calciumoxid (CaO) und Aluminiumpulver (Al) umfasst. Bei Wasserzufuhr findet eine mehrstufige chemische Reaktion statt, bei der zum einen das Calciumoxid mit dem Wasser unter Wärmeentwicklung in Calciumhydroxid umgesetzt wird und bei der dann das Calciumhydroxid mit dem Aluminium zu Calciumaluminat und Wasserstoff reagiert, wobei weitere Wärme entsteht. Mit einer derartigen Stoffmischung lassen sich Temperaturen von 90°C und mehr erreichen, wobei zu beachten ist, dass bei Temperaturen über 100°C aus einem Teil des Wasser zusätzlich Wasserdampf entsteht. Wenn die Reaktion in einem geschlossenen Behälter abläuft, so kann der hohe Gasdruck bei Temperaturen über 100°C zu einem Bersten des Behälters führen. Mit der in der Druckschrift vorgeschlagenen Heizmischung werden deshalb nur Erwärmungen unter 100°C ausgeführt.

Eine transportable Vorrichtung ist aus der DE 202010015079 U1 bekannt.

Eine andere Stoffmischung zum Erzeugen von Wärme ist aus der DE 10 2008 015 677 A1 bekannt. Dort befindet sich in einer verschlossenen Kammer ein Zeolith-Granulat sowie Wasser enthaltender Beutel. Um die Wärme zu erzeugen, wird zunächst der Wasser-Beutel zum Platzen gebracht, woraufhin sich das Wasser innerhalb des umgebenden Beutels verteilt und auf das Zeolith-Granulat einwirkt. Das Zeolith nimmt das Wasser auf, wobei Wärme erzeugt wird. Nachteilig bei der dort vorgeschlagenen Anordnung ist es, dass zunächst eine zügige Verteilung des Wassers innerhalb des Beutels erreicht werden muss, was beispielsweise durch wasserleitende Zusatzschichten aus einem saugfähigen Material erreicht werden soll. Wird nämlich das Wasser nicht schlagartig in dem Beutel verteilt, so reagiert es zunächst nur mit den angrenzenden Teilen des Zeolith-Granulats, wobei diese Mischung dann eine Barriere bildet, die eine weitere Verteilung des Wassers behindert. Dadurch verringert sich wiederum die Wärmeausbeute.

Aufgabe der Erfindung ist es daher, eine transportable Vorrichtung zum Erhitzen von Lebensmitteln zu schaffen, bei der die oben genannten Nachteile des Standes der Technik vermieden werden und bei der hohe Temperaturen oberhalb von 100°C erreicht werden können, ohne dass heiße Dämpfe oder unangenehme Gerüche aus dem Erhitzungsraum austreten.

Diese Aufgabe wird erfindungsgemäß durch eine transportable Vorrichtung mit den Merkmalen des Anspruchs 1 gelöst. Die transportable Vorrichtung zum Erhitzen von Lebensmitteln weist einen Behälter zum Aufnehmen der Lebensmittel und einen an den Behälter angrenzenden abgeschlossenen Erhitzungsraum auf. Der Erhitzungsraum ist über eine gemeinsame wärmeleitende Wandung mit dem Behälter thermisch gekoppelt und zugleich hermetisch von diesem getrennt. Der Erhitzungsraum weist eine erste Kammer und eine zweite Kammer auf, die durch eine wasserdampfdurchlässige Wandung getrennt sind. In der ersten Kammer befindet sich eine Stoffmischung, die bei Zufuhr von Wasser in einer exothermen chemischen Reaktion Wärme erzeugt, wobei Wasserdampf gebildet wird. In der zweiten Kammer befindet sich ein Zeolith (beispielsweise in Form eines Granulats, eines Pulvers oder eines porösen Presskörpers), das das aus der ersten Kammer über die wasserdampfdurchlässige Wandung eintretende Wasser unter Wärmebildung adsorbieren kann. Damit das Zeolith diese Funktion ausführen kann, muss es selbstverständlich wasserfrei oder zumindest wasserarm sein.

Die Erfindung basiert auf dem Kerngedanken, dass in dem Erhitzungsraum eine chemische exotherme Reaktion mit einer physikalischen exothermen Reaktion in einer optimalen Weise kombiniert werden, so dass die bei der chemischen Reaktion auftretenden Gase zumindest teilweise derart bei der physikalischen exothermen Reaktion adsorbiert werden, dass der Druck unter dem Maximaldruck gehalten werden kann, der zu einem Bersten der Wandung führen könnte. Dadurch gelingt es, den Erhitzungsraum gegenüber der Umgebung abzuschließen. Lediglich für den Notfall kann ein Überdruckventil in der Wandung des Erhitzungsraums vorgesehen sein. Durch die Aufteilung in die Kammern wird ferner erreicht, dass das Wasser zunächst vorrangig für die exotherme chemische Reaktion verwendet wird und im Wesentlichen nur der entstehende Wasserdampf für die exotherme physikalische Reaktion zur Verfügung steht. Wenn hier von einer ersten Kammer und einer zweiten Kammer gesprochen wird, so soll dies auch diejenigen Fälle umfassen, bei denen mehrere erste und/oder zweite Kammern vorgesehen sind.

Vorzugsweise befindet sich die wärmeleitende Wandung zumindest an einem Teil der Unterseite des Behälters. Dies erleichtert die Wärmezufuhr. Die wärmeleitende Wandung ist vorzugsweise eine Metallwandung. Hier kann insbesondere eine preiswerte Metallwandung, beispielsweise aus Dosenblech, vorgesehen sein, wobei der gesamte Behälter aus diesem Material geformt sein kann.

Bei einer bevorzugten Ausführungsform ist die zweite Kammer derart über zumindest einem Teil der ersten Kammer angeordnet, dass sich die Unterseite der zweiten Kammer über dem nach Zufuhr des Wassers entstehenden Reaktionsgemisch in der ersten Kammer (das regelmäßig ein höheres Volumen in der ersten Kammer einnimmt als die Stoffmischung zuvor) befindet. Dadurch lässt sich vorteilhaft vermeiden, dass das Wasser noch vor seiner Reaktion mit dem Stoffgemisch in der ersten Kammer bereits zu einem wesentlichen Teil durch die wasserdampfdurchlässige Wandung in die zweite Kammer eindringt. Vorzugsweise ist die zweite Kammer unter dem Behälter und die erste Kammer unter der zweiten Kammer angeordnet und sind die erste Kammer, die zweite Kammer und die wärmeleitende Wandung bildender Boden des Behälters von etwa gleicher horizontaler Ausdehnung. Die erste Kammer und die zweite Kammer sind vorzugsweise von einer Bauhöhe, die bei etwa 3 bis 30 % der Außenabmessungen des Bodens des Behälters liegt. Dies bedeutet, dass ein flacher Erhitzungsraum gebildet wird, der ein geringes Volumen einnimmt und eine gute Wärmeübertragung zu dem Behälter ermöglicht. Bei einer anderen Ausführungsform kann die zweite Kammer ringförmig derart über der ersten Kammer angeordnet sein, dass die erste Kammer in einem zentralen Bereich und die zweite Kammer in einem dem zentralen Bereich umgebenden ringförmigen Bereich an einen die wärmeleitende Wandung bildenden Boden des Behälters angrenzen. Bei dieser Ausführungsform wird die in der ersten Kammer gebildete Wärme zumindest teilweise direkt an den Behälterboden abgegeben, was zu einer schnelleren Aufheizung des Behälters führt. In Abhängigkeit von dem für die exotherme chemische Reaktion verwendeten Stoffgemisch und in Abhängigkeit vom Material des Behälters und insbesondere vom Material der wärmeleitenden Wandung kann es vorteilhaft sein, die erste Kammer nicht direkt an den wärmeleitenden Boden des Behälters angrenzen zu lassen, weil möglicherweise Stoffe der Stoffmischung mit dem Metall des Behälterbodens reagieren könnten. Die Wahl der Konstruktionsalternativen hängt somit insbesondere von der Wahl der Stoffmischung und der verwendeten Behälter-Materialien ab.

Bei einer vorteilhaften Weiterbildung der erfindungsgemäßen Vorrichtung wird die wasserdampfdurchlässige Wandung von einem textilen Gewebe, insbesondere von einem Vliesstoff, gebildet. Dieser soll von einer Dicke und Faserdichte sein, die einen schnellen Hindurchtritt des Wasserdampfes ermöglicht, andererseits aber ausreichende mechanische Trennsicherheit gewährleistet. Es ist auch denkbar, einen mehrschichtigen Wandungsaufbau zu wählen, bei dem sich die Eigenschaften der Wandung im Verlauf der Reaktionen ändern. Insbesondere kann es hier vorteilhaft sein, dass die Wandung zunächst wasserdicht ist, so dass das in die erste Kammer eingebrachte Wasser nicht in die zweite Kammer eindringen kann und vollständig für die chemische Reaktion zur Verfügung steht. Die Wandung kann eine Schicht umfassen, die sich entweder im Wasser auflöst oder bei Wärmeeinwirkung schmilzt. Wirkt dann das Wasser oder die in der ersten Kammer gebildete Wärme auf diese, vorzugsweise an der Unterseite der wasserdampfdurchlässige Wandung befindliche Schicht ein, so löst sie sich auf oder schmilzt, was anschließend den Durchtritt des Wassers und des Wasserdampfes gestattet. Eine zweite, hinter der sich auflösenden oder schmelzenden Schicht angeordnete Schicht dient danach lediglich zur mechanischen Abtrennung der beiden Kammern. Die wasserdampfdurchlässige Wandung kann beispielsweise aus einer Kombination einer wasserlöslichen Folie mit einem darüber angeordneten Vlies, Filterpapier oder auch Metallsieb bestehen.

Bei einer vorteilhaften Ausführungsform ist das textile Gewebe der wasserdampfdurchlässigen Wandung auf der der ersten Kammer zugewandten Seite mit einer wasserabweisenden Beschichtung versehen oder hydrophobiert. Dies bewirkt ein verzögertes Eindringen des Wassers in die zweite Kammer, so dass das Wasser zunächst der chemischen Reaktion in der ersten Kammer vollständiger zur Verfügung steht.

Das für die chemische Reaktion verwendete Wasser kann entweder bereits in der transportablen Vorrichtung deponiert sein, oder es kann über eine Öffnung von außen der ersten Kammer zugeführt werden. Eine vorteilhafte Ausführungsform ist **dadurch** gekennzeichnet, **dass** eine Wasser enthaltende dritte Kammer vorgesehen ist, die von der ersten und der zweiten Kammer getrennt ist, wobei eine Vorrichtung zum Herstellen einer das Wasser aus der dritten Kammer in die erste Kammer einleitenden Verbindung vorgesehen ist. Vorzugsweise ist die dritte Kammer benachbart zu der ersten Kammer und durch eine wasserdichte Wandung getrennt angeordnet. Die Vorrichtung zum Herstellen einer das Wasser aus der dritten Kammer in die erste Kammer einleitenden Verbindung umfasst dabei beispielsweise eine Vorrichtung zum Herstellen einer Öffnung in der wasserdichten Wandung.

Bei einer anderen vorteilhaften Weiterbildung weist eine Außenwandung der ersten Kammer eine wiederverschließbare Öffnung zum Einleiten von Wasser auf. Die wiederverschließbare Öffnung kann beispielswiese ein selbstschließendes Ventil aus einem elastischen Material aufweisen. Bei dieser Ausführungsform ist es denkbar, dass das Wasser von einer Dosiervorrichtung, beispielsweise einer Kolbenspritze, aufgenommen werden kann, woraufhin die Dosiervorrichtung (d.h. die Spritze) an die wiederverschließbare Öffnung angekoppelt wird und das Wasser durch die Öffnung hindurch eingespritzt wird, woraufhin sich die Öffnung wieder verschließt.

Bei einer bevorzugten Ausführung der transportablen Vorrichtung zum Erhitzen von Lebensmitteln bildet die Stoffmischung bei Zufuhr von Wasser in einer exothermen chemischen Reaktion neben dem Wasserdampf weitere Reaktionsgase (wie beispielsweise Wasserstoff), wobei die Wandung auch für diese weiteren Reaktionsgase durchlässig ist und wobei die Reaktionsgase ebenfalls von dem Zeolith absorbiert werden, vorzugsweise ebenfalls in einer exothermen Reaktion.

Eine bevorzugte Ausführungsform ist **dadurch gekennzeichnet, dass** die Stoffmischung in der ersten Kammer Calciumoxid enthält. Vorzugsweise enthält die Stoffmischung zusätzlich Aluminiumpulver oder -granulat. Bei einer bevorzugten Weiterbildung kann die Stoffmischung ferner Natriumcarbonat oder Kaliumcarbonat enthalten.

Bei bevorzugten Ausführungsformen ist die transportable Vorrichtung **dadurch gekennzeichnet, dass** der Erhitzungsraum und zumindest ein sich anschließender Teil des Behälters von einer wärmeisolierenden Wandung umhüllt sind. Dadurch wird eine unerwünschte Wärmeableitung in die Umgebung verringert.

Vorteilhafte und/oder bevorzugte Ausführungsformen der Erfindung sind in den Unteransprüchen gekennzeichnet.

Nachfolgend wird die Erfindung anhand von in den Zeichnungen dargestellten bevorzugten Ausführungsbeispielen näher erläutert. In den Zeichnungen zeigen:
Figur 1 eine schematische Schnittdarstellung durch eine erste Ausführungsform der erfindungsgemäßen transportablen Vorrichtung zum Erhitzen von Lebensmitteln;
Figur 2 eine schematische Schnittdarstellung durch eine zweite Ausführungsform der erfindungsgemäßen transportablen Vorrichtung; und
Figur 3 eine schematische Schnittdarstellung durch eine dritte Ausführungsform der erfindungsgemäßen transportablen Vorrichtung.

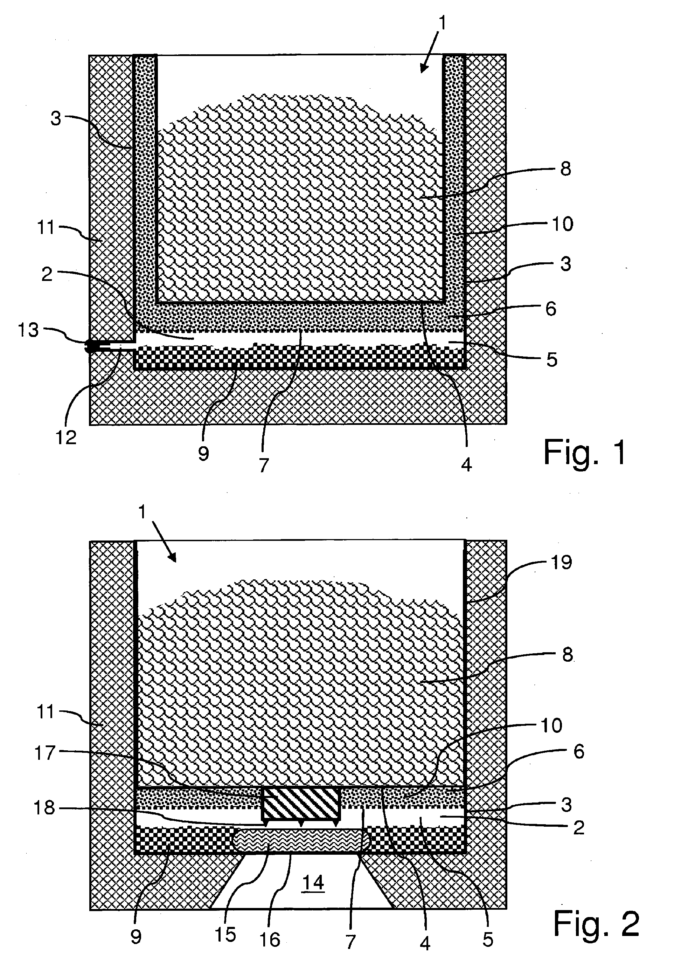

Die Figuren 1 bis 3 zeigen schematische Schnittdarstellungen dreier bevorzugter Ausführungsbeispiele der erfindungsgemäßen transportablen Vorrichtung zum Erhitzen von Lebensmitteln. Die Form der Behälter und die daran angepasste Form des Erhitzungsraums richtet sich u. a. nach der Art des zu erhitzenden Lebensmittels. Die Lebensmittel können beispielsweise Flüssigkeiten darstellen, wie Getränke oder Suppen. In diesem Fall treten Temperaturen unterhalb der Siedetemperatur von 100 °C auf. Jedoch ist die erfindungsgemäße transportable Vorrichtung aufgrund des Umstands, dass mit ihr Temperaturen oberhalb von 100°C erzeugt werden können, insbesondere auch für solche Lebensmittel geeignet, die nicht nur lediglich erwärmt werden sollen, sondern bei denen das Erhitzen auch der Zubereitung dient, die also beispielsweise gebacken werden sollen. Beim Erhitzen sollen somit Prozesse in den Lebensmitteln ablaufen, die das Lebensmittel in einen genießbaren Zustand versetzen. Solche Prozesse umfassen insbesondere das Fertigbacken vorgebackener Gebäckstücke.

Figur 1 zeigt eine erste bevorzugte Ausführungsform der transportablen Vorrichtung. In einem Behälter 1, der geschnitten dargestellt ist, befindet sich ein Lebensmittel, beispielsweise eine Teigportion für ein zu backendes Gebäckstück. Um den Behälter 1 herum ist ein Erhitzungsraum 2 angeordnet, der allseitig geschlossen ist. Der Behälter 1 mit dem Erhitzungsraum 2 bildet hier ein doppelwandiges Gefäß. Der Erhitzungsraum 2 ist über die gemeinsame wärmeleitende Wandung 4 mit dem Behälter thermisch gekoppelt. Um die Außenwandung 3 des Erhitzungsraums 2 herum ist eine Wärmeisolationsschicht 11 angeordnet. Der Erhitzungsraum 2 ist durch die Wandung 7 in eine untere erste Kammer 5 und eine obere zweite Kammer 6 unterteilt. In der unteren ersten Kammer 5 befindet sich eine Stoffmischung 9, die bei Zufuhr von Wasser in einer exothermen chemischen Reaktion Wärme erzeugt, wobei Wasserdampf gebildet wird. Um die Zufuhr des Wassers in die erste Kammer 5 zu ermöglichen, weist die transportable Vorrichtung gemäß Figur 1 eine Öffnung 12 (beispielsweise in Form eines dünnen Rohres) auf, die durch ein selbstschließendes Ventil 13, beispielsweise aus einem elastischen Material, verschlossen ist. Diese Art des Verschlusses ist vergleichbar mit dem Ventil eines aufblasbaren Balls. Um das Einbringen des Wassers in die untere Kammer 5 zu ermöglichen, nimmt die Stoffmischung 9 - wie in Figur 1 dargestellt - nicht das gesamte Volumen der ersten Kammer 5 ein. Vielmehr verbleibt über der Stoffmischung 9 in der Kammer 5 ein Leervolumen. Dieses Leervolumen kann beispielsweise ganz oder teilweise evakuiert sein. Ein derartiges Evakuieren des Volumens ermöglicht aufgrund des Unterdrucks ein einfaches Einspritzen der erforderlichen Wassermenge durch die Öffnung 12 hindurch. Zu diesem Zweck wird beispielsweise eine (in Figur 1 nicht dargestellte) Kanüle einer mit einer vorgegebenen Wassermenge gefüllten Spritze durch das Ventil 13 hindurch in die Öffnung 12 eingestochen. Anschließend wird die vorgegebene Wassermenge in die Kammer 5 entleert, woraufhin eine Durchmischung des Wassers mit der Stoffmischung 9 stattfinden kann.

Die obere zweite Kammer 6 ist mit einem Zeolith-Granulat gefüllt. Anstelle des Granulats kann auch ein Presskörper aus Zeolith-Granulat oder (weniger bevorzugt) ein Pulver verwendet werden.

Bei dieser und den anderen Ausführungsformen ist die Stoffmischung 9 vorzugsweise eine Mischung aus Calciumoxid und Aluminium, wobei beide Stoffe vorzugsweise in Pulverform miteinander gemischt sind. Bei einer bevorzugten Mischung wird eine vorgegebene Menge des Calciumoxids mit etwa derselben bis etwa der vierfachen Menge des Aluminiumpulvers gemischt. Zusätzlich kann noch ein geringerer Anteil Natriumcarbonat (beispielsweise 1/3 der Menge des Calciumoxids) zugesetzt werden. Die Menge des zugegebenen Wassers beträgt vorzugsweise das 1,5- bis 2,5-fache der Menge der Pulvermischung, vorzugsweise etwa das Doppelte der Menge der Pulvermischung.

Zum Erwärmen der Lebensmittel 8 in dem Behälter 1 wird wie folgt vorgegangen. Eine vorgegebene Menge Wasser wird durch die Öffnung 12 in die untere Kammer 5 eingespritzt. Nach dem Herausziehen der Nadel der Spritze verschließt sich die Öffnung 12 durch das Ventil 13 automatisch. Das Wasser vermischt sich in der Kammer 5 mit der Pulvermischung 9, und es beginnt eine exotherme chemische Reaktion, die zur Erwärmung der Mischung in der Kammer 5 führt. Bei dieser chemischen Reaktion und der damit einhergehenden Erwärmung entstehen Gase, wie beispielsweise im Falle einer Pulvermischung aus Calciumoxid und Aluminium Wasserstoff sowie Wasserdampf. Die entstehende Wärme steigt zum Boden des Behälters auf. Zugleich durchdringen der Wasserdampf und die anderen entstehenden Gase die Wandung 7 und treffen in der Kammer 6 auf das Zeolith 10. Das Zeolith adsorbiert den Wasserdampf und die eindringenden Gase, wobei zusätzlich Wärme freigesetzt wird. Daneben kann auch ein Anteil des Wassers aus der Kammer 5 in die Kammer 6 gelangen, wo es ebenfalls unter Wärmebildung durch das Zeolith adsorbiert wird. Die in der unteren Kammer 5 und der oberen Kammer 6 gebildete Wärme erhitzt den Behälter 1 und die darin befindlichen Lebensmittel 8. Die wärmeisolierende Ummantelung 11 sorgt für geringe Wärmeverluste. Aufgrund der Erwärmung des Wassers und der entstehenden heißen Reaktionsgase erhöht sich der Druck in dem Erhitzungsraum 2, der allseitig von Wandungen 3, 4 umschlossen ist. Der Erhitzungsraum 2 muss diesem Druck standhalten. Der Druck wird dann wiederum durch die Adsorption der Gase in dem Zeolith reduziert. Die verwendete Menge des in der Kammer 6 enthaltenen Zeoliths 10 muss auf die verwendeten Mengen der Stoffmischung und des Wassers so abgestimmt sein, dass der Druck während des gesamten Ablaufs einen Maximaldruck nicht überschreitet.

Die dampfdurchlässige Wandung 7 muss so ausgebildet sein, dass sie zumindest anfänglich dafür sorgt, dass das eingebrachte Wasser zum überwiegenden Teil in der ersten Kammer 5 verbleibt, um dort mit der Stoffmischung 9 zu reagieren. Zugleich muss die Wandung es ermöglichen, dass der in der Kammer 5 entstehende Dampf und die dort entstehenden Reaktionsprodukte gasförmiger Art schnell in die Kammer 6 geleitet werden. Als Wandung 7 kann beispielsweise ein dünner Vliesstoff verwendet werden, der bodenseitig mit einer wasserabweisenden Schicht überzogen ist. Anstelle des Vliesstoffs könnten auch andere Gewebe aus Textilfasern, Kunststoff oder Metall verwendet werden.

Figur 2 zeigt ein zweites Ausführungsbeispiel der erfindungsgemäßen transportablen Vorrichtung zum Erhitzen von Lebensmitteln. Bei der Ausführungsform gemäß Figur 2 ist die Erhitzungskammer 2 lediglich unter dem Behälter 1 mit den Lebensmitteln 8 angeordnet. Die Seitenwandung 19 des Behälters 1 ist außen lediglich mit der wärmeisolierenden Wandung 11 umhüllt. Der Erhitzungsraum 2 ist wiederum in eine untere erste Kammer 5 und eine obere zweite Kammer 6 unterteilt, zwischen denen sich die wasserdampfdurchlässige Wandung 7 befindet. In der oberen Kammer 6 befindet sich das Zeolith. In der unteren Kammer 5 befindet sich die Stoffmischung 9 und außerdem ist darin eine dritte Kammer 15 angeordnet, die die erforderliche Wassermenge enthält. Die dritte Kammer 15 ist von einer dünnen, wasserdichten Wandung umhüllt. Zum Auslösen der exothermen chemischen Reaktion ist es erforderlich, die dünne Wandung der dritten Kammer 15 zu zerstören. Dazu ist gemäß Figur 2 folgende Anordnung vorgesehen. Oberhalb der dritten Kammer 15 befindet sich eine zentral am Boden des Behälters 1 befestigte Halterung 17, beispielsweise ein Metallblock. An der Unterseite der Halterung 17 ist eine Mehrzahl von Spitzen 18 angeordnet, die in der Lage sind, die dünne Wandung der Kammer 15 zu durchstechen. Allerdings sind diese Spitzen vertikal beabstandet zu der oberen Wandung der Kammer 15 angeordnet, so dass sie die Wandung nur dann durchstechen können, wenn die Wandung den Spitzen angenähert wird. Zu diesem Zweck ist am Boden der wärmeisolierenden Umhüllung 11 eine Öffnung 14 vorgesehen und weist die bodenseitige Wandung der unteren Kammer 5 an der Stelle der Öffnung 14 eine elastische Membran 16 auf. Durch manuelles Eindrücken der Membran 16 kann die wassergefüllte Kammer 15 soweit nach oben bewegt werden, dass die Umhüllung der Kammer 15 gegen die Spitzen 18 gepresst wird. Dabei wird die Wandung zerstört, so dass das Wasser aus der Kammer 15 in die Kammer 5 eindringen und sich dort mit der Stoffmischung 9 vermischen kann. Die übrigen Merkmale des Ausführungsbeispiels gemäß Figur 2 entsprechen im Wesentlichen denen des Ausführungsbeispiels gemäß Figur 1, so dass auf die obigen Ausführungen verwiesen werden kann.

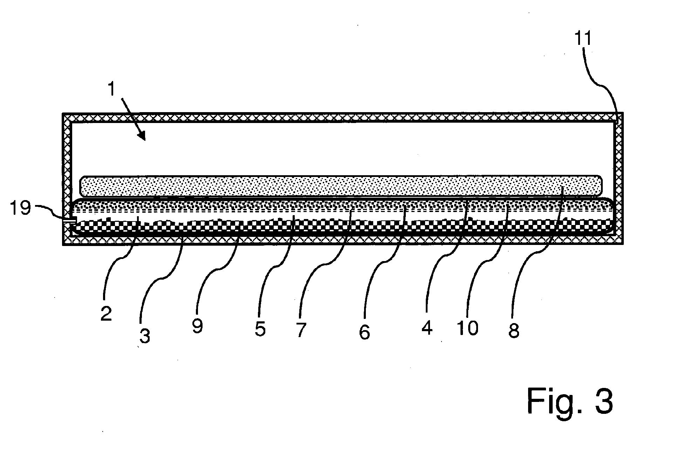

Figur 3 zeigt ein drittes Ausführungsbeispiel der erfindungsgemäßen transportablen Vorrichtung zum Erhitzen von Lebensmitteln, die insbesondere an das Erhitzen oder Backen flacher, flächiger Lebensmittel, wie beispielsweise einer Pizza, angepasst ist. Der Behälter 1 wird hierbei von einer wärmeisolierenden Hülle 11, beispielsweise einem Pappkarton, gebildet. Im Inneren des Behälters 1, d. h. auf dem Boden des Kartons, befindet sich der geschlossene Erhitzungsraum 2, der wiederum durch die wasserdampfdurchlässige Wandung 7 in eine untere Kammer 5 und eine obere Kammer 6 unterteilt ist. Das zu erhitzende Lebensmittel 8, beispielsweise die zu backende Pizza, liegt auf der wärmeleitenden Wandung 4 auf, die gleichzeitig eine den Erhitzungsraum 2 begrenzte Wandung und eine Wandung des Behälters 1 (Backraums) darstellt. In der unteren Kammer 5 befindet sich wiederum die Stoffmischung 9, während sich in der oberen Kammer 6 das Zeolith 10 befindet. Bei dem in Figur 3 dargestellten Ausführungsbeispiel weist die Außenwandung der unteren Kammer 5 wiederum eine verschließbare Öffnung 19 zum Einleiten von Wasser auf. Bei einer alternativen Ausführungsform der in Figur 3 gezeigten Variante kann auch das Wasser in einem wasserdichten Behälter innerhalb des Erhitzungsraums 2 untergebracht sein, wie dies beispielshaft anhand der Ausführungsform gemäß Figur 2 beschrieben wurde.

Um den Wirkungsgrad der Übertragung der Wärme von dem Erhitzungsraum auf das Lebensmittel 8 zu erhöhen und den Wärmeverlust zu verringern, sind verschiedene zusätzliche konstruktive Maßnahmen denkbar. Neben dem Aufbringen wärmeisolierender Schichten (beispielsweise Schicht 11) können auch auf der Innenseite des Behälters 1 wärmereflektierende Schichten aufgebracht sein. Beispielsweise kann die Innenwandung des Pappkartons gemäß Figur 3 mit einer Aluminiumfolie überzogen sein.

Die verwendeten Mengen der Stoffmischung 9, des zuzuführenden Wassers und des Zeoliths 10 sowie die Dicke der Wärmeisolationsschicht 11 sind so aufeinander und auf die Menge des Lebensmittels 8 abgestimmt, dass die gewünschte Temperatur im Behälter 1 für eine vorgegebene Mindestzeitdauer erreicht wird, ohne dass es zu einem Bersten des Erhitzungsraums 2 kommen kann. Durch geeignete Wahl der Stoffmischung 9 und der Wasserverteilung kann außerdem dafür gesorgt werden, dass es nicht zu lokalen oder zu schnellen Überhitzungen mit einem zu hohen Innendruck kommen kann. Eine optimale Wahl dieser Mengen bei vorgegebenen Abmessungen des Behälters 1 und Mengen des zu erhitzenden Lebensmittels 8 kann auf einfache Weise experimentell bestimmt werden.

## Patentansprüche

1. Transportable Vorrichtung zum Erhitzen von Lebensmitteln, aufweisend:
einen Behälter (1) zum Aufnehmen der Lebensmittel (8) und
einen an den Behälter (1) angrenzenden abgeschlossenen Erhitzungsraum (2), der über eine gemeinsame wärmeleitende Wandung (4) mit dem Behälter (1) thermisch gekoppelt und zugleich hermetisch von diesem getrennt ist,
wobei der Erhitzungsraum (2) eine erste Kammer (5) und eine zweite Kammer (6) aufweist, die durch eine wasserdampfdurchlässige Wandung (7) getrennt sind,
wobei sich in der ersten Kammer (5) eine Stoffmischung (9) befindet, die bei Zufuhr von Wasser in einer exothermen chemischen Reaktion Wärme erzeugt, wobei Wasserdampf gebildet wird, und
wobei sich in der zweiten Kammer (6) ein Zeolith (10) befindet, das das aus der ersten Kammer (5) über die wasserdampfdurchlässige Wandung (7) eintretende Wasser unter Wärmebildung adsorbieren kann.

2. Transportable Vorrichtung zum Erhitzen von Lebensmitteln nach Anspruch 1, **dadurch gekennzeichnet, dass** sich die wärmeleitende Wandung (4) zumindest an einem Teil der Unterseite des Behälters (1) befindet.

3. Transportable Vorrichtung zum Erhitzen von Lebensmitteln nach Anspruch 1 oder 2, **dadurch gekennzeichnet, dass** die wärmeleitende Wandung (4) eine Metallwandung umfasst.

4. Transportable Vorrichtung zum Erhitzen von Lebensmitteln nach einem der Ansprüche 1 - 3, **dadurch gekennzeichnet, dass** die zweite Kammer (6) derart über zumindest einem Teil der ersten Kammer (5) angeordnet ist, dass sich die Unterseite der zweiten Kammer (6) über dem nach Zufuhr des Wassers entstehenden Reaktionsgemisch in der ersten Kammer (5) befindet.

5. Transportable Vorrichtung zum Erhitzen von Lebensmitteln nach Anspruch 4, **dadurch gekennzeichnet, dass** die zweite Kammer (6) unter dem Behälter (1) und die erste Kammer (5) unter der zweiten Kammer (6) angeordnet ist, und dass die erste Kammer (5), die zweite Kammer (6) und ein die wärmeleitende Wandung (4) bildender Boden des Behälters (1) von etwa gleicher horizontaler Ausdehnung sind und die erste Kammer (5) und die zweite Kammer (6) von einer Bauhöhe sind, die bei ca. 3 bis 30 % der Außenabmessungen des Bodens des Behälters (1) liegt.

6. Transportable Vorrichtung zum Erhitzen von Lebensmitteln nach Anspruch 4, **dadurch gekennzeichnet, dass** die zweite Kammer (6) ringförmig derart über der ersten Kammer (5) angeordnet ist, dass die erste Kammer (5) in einem zentralen Bereich und die zweite Kammer (6) in einem den zentralen Bereich umgebenden ringförmigen Bereich an einen die wärmeleitende Wandung (4) bildenden Boden des Behälters (1) angrenzen.

7. Transportable Vorrichtung zum Erhitzen von Lebensmitteln nach einem der Ansprüche 1 - 6, **dadurch gekennzeichnet, dass** die wasserdampfdurchlässige Wandung (7) von einem textilen Gewebe, insbesondere von einem Vliesstoff, gebildet wird.

8. Transportable Vorrichtung zum Erhitzen von Lebensmitteln nach Anspruch 7, **dadurch gekennzeichnet, dass** das textile Gewebe der wasserdampfdurchlässigen Wandung (7) auf der der ersten Kammer (5) zugewandten Seite mit einer wasserabweisenden Beschichtung versehen oder hydrophobisiert ist.

9. Transportable Vorrichtung zum Erhitzen von Lebensmitteln nach einem der Ansprüche 1 - 8, **dadurch gekennzeichnet, dass** eine Wasser enthaltende dritte Kammer (15) vorgesehen ist, die von der ersten und der zweiten Kammer (5, 6) getrennt ist, wobei eine Vorrichtung (14, 16, 17, 18) zum Herstellen einer das Wasser aus der dritten Kammer (15) in die erste Kammer (6) einleitenden Verbindung vorgesehen ist.

10. Transportable Vorrichtung zum Erhitzen von Lebensmitteln nach Anspruch 9, **dadurch gekennzeichnet, dass** die dritte Kammer (15) benachbart zu der ersten Kammer (5) und durch eine wasserdichte Wandung getrennt angeordnet ist, und dass die Vorrichtung (14, 16, 17, 18) zum Herstellen einer das Wasser aus der dritten Kammer (15) in die erste Kammer (5) einleitenden Verbindung eine Vorrichtung (18) zum Herstellen einer Öffnung in der wasserdichten Wandung umfasst.

11. Transportable Vorrichtung zum Erhitzen von Lebensmitteln nach einem der Ansprüche 1 - 10, **dadurch gekennzeichnet, dass** eine Außenwandung der ersten Kammer (5) eine wiederverschließbare Öffnung (12; 19) zum Einleiten von Wasser aufweist.

12. Transportable Vorrichtung zum Erhitzen von Lebensmitteln nach Anspruch 11, **dadurch gekennzeichnet, dass** die wiederverschließbare Öffnung (12; 19) ein selbstschließendes Ventil (13) aus einem elastischen Material aufweist.

13. Transportable Vorrichtung zum Erhitzen von Lebensmitteln nach einem der Ansprüche 1 - 12, **dadurch gekennzeichnet, dass** die Stoffmischung (9) bei Zufuhr von Wasser in einer exothermen chemischen Reaktion neben dem Wasserdampf weitere Reaktionsgase bildet, wobei die wasserdampfdurchlässige Wandung (7) auch für diese Reaktionsgase durchlässig ist und wobei die Reaktionsgase ebenfalls von dem Zeolith (10) adsorbiert werden.

14. Transportable Vorrichtung zum Erhitzen von Lebensmitteln nach einem der Ansprüche 1 - 13, **dadurch gekennzeichnet, dass** die Stoffmischung (9) in der ersten Kammer (5) Calciumoxid enthält.

15. Transportable Vorrichtung zum Erhitzen von Lebensmitteln nach Anspruch 14, **dadurch gekennzeichnet, dass** die Stoffmischung (9) in der ersten Kammer (5) zusätzlich Aluminiumpulver oder -granulat enthält.

16. Transportable Vorrichtung zum Erhitzen von Lebensmitteln nach Anspruch 15, **dadurch gekennzeichnet, dass** die Stoffmischung (9) in der ersten Kammer (5) zusätzlich Natriumcarbonat oder Kaliumcarbonat enthält.

17. Transportable Vorrichtung zum Erhitzen von Lebensmitteln nach einem der Ansprüche 1 - 16, **dadurch gekennzeichnet, dass** der Erhitzungsraum (2) und zumindest ein sich anschließender Teil des Behälters (1) von einer wärmeisolierenden Wandung (11) umhüllt sind.

## Claims

1. A transportable device for the heating of foodstuffs, having:
a container (1) for the reception of the foodstuffs (8) and
a self-contained heating compartment (2) adjoining the container (1), which is thermally coupled with the container (1) via a common heat conducting wall (4),
and at the same time is hermetically separated from the latter,
wherein the heating compartment (2) has a first chamber (5) and a second chamber (6), which are separated by a wall (7) permeable to water vapour,
wherein a mixture of substances (9) is located in the first chamber (5), which, with the supply of water, generates heat in an exothermic chemical reaction, wherein water vapour is formed, and
wherein a zeolite (10) is located in the second chamber (6), which can absorb the water entering from the first chamber (5) via the wall (7) permeable to water vapour with the generation of heat.

2. A transportable device for the heating of foodstuffs in accordance with Claim 1, **characterised in that** the heat conducting wall (4) is located on at least one part of the lower face of the container (1).

3. A transportable device for the heating of foodstuffs in accordance with Claim 1 or 2, **characterised in that** the heat conducting wall (4) comprises a metal wall.

4. A transportable device for the heating of foodstuffs in accordance with one of the Claims 1-3, **characterised in that** the second chamber (6) is arranged above at least one part of the first chamber (5) such that the lower face of the second chamber (6) is located above the reaction mixture originating in the first chamber (5) after the supply of water.

5. A transportable device for the heating of foodstuffs in accordance with Claim 4, **characterised in that** the second chamber (6) is arranged below the container (1), and the first chamber (5) is arranged below the second chamber (6), and **in that** the first chamber (5), the second chamber (6) and a floor of the container (1), forming the heat conducting wall (4) have approximately the same horizontal extent, and the first chamber (5) and the second chamber (6) have a build height that is approx. 3 to 30% of the external dimensions of the floor of the container (1).

6. A transportable device for the heating of foodstuffs in accordance with Claim 4, **characterised in that** the second chamber (6) is arranged in the form of an annulus above the first chamber (5), such that the first chamber (5) in a central region, and the second chamber (6) in an annular region surrounding the central region, border a floor of the container (1) forming the heat conducting wall (4).

7. A transportable device for the heating of foodstuffs in accordance with one of the Claims 1-6, **characterised in that** the wall (7) permeable to water vapour is formed from a textile fabric, in particular from a non-woven fabric.

8. A transportable device for the heating of foodstuffs in accordance with Claim 7, **characterised in that** on the side facing towards the first chamber (5) the textile fabric of the wall (7) permeable to water vapour is provided with a water-resistant coating, or is hydrophobised.

9. A transportable device for the heating of foodstuffs in accordance with one of the Claims 1-8, **characterised in that** a third chamber (15) containing water is provided, which is separated from the first and second chambers (5, 6), wherein a device (14, 16, 17, 18) is provided for making a connection that introduces the water from the third chamber (15) into the first chamber (6).

10. A transportable device for the heating of foodstuffs in accordance with Claim 9, **characterised in that** the third chamber (15) is arranged adjacent to the first chamber (5) and separated by a watertight wall, and **in that** the device (14, 16, 17, 18) for making a connection that introduces the water from the third chamber (15) into the first chamber (5) comprises a device (18) for making an opening in the watertight wall.

11. A transportable device for the heating of foodstuffs in accordance with one of the Claims 1-10, **characterised in that** an external wall of the first chamber (5) has a re-closable opening (12; 19) for the introduction of water.

12. A transportable device for the heating of foodstuffs in accordance with one of the Claims 11, **characterised in that** the re-closable opening (12; 19) has a self-closing valve (13) of an elastic material.

13. A transportable device for the heating of foodstuffs in accordance with one of the Claims 1-12, **characterised in that** with the supply of water the mixture of substances (9) forms, in addition to the water vapour, other reaction gases in an exothermic chemical reaction, wherein the wall (7) permeable to water vapour is also permeable to these reaction gases, and wherein the reaction gases are similarly absorbed by the zeolite (10).

14. A transportable device for the heating of foodstuffs in accordance with one of the Claims 1-13, **characterised in that** the mixture of substances (9) in the first chamber (5) contains calcium oxide.

15. A transportable device for the heating of foodstuffs in accordance with Claim 14, **characterised in that** the mixture of substances (9) in the first chamber (5) also contains aluminium powder or aluminium granulate.

16. A transportable device for the heating of foodstuffs in accordance with Claim 15, **characterised in that** the mixture of substances (9) in the first chamber (5) also contains sodium carbonate or potassium carbonate.

17. A transportable device for the heating of foodstuffs in accordance with one of the Claims 1-16, **characterised in that** the heating compartment (2) and at least one adjacent part of the container (1) are encased by a heat insulating wall (11).

## Revendications

1. Dispositif transportable pour réchauffer des produits alimentaires, présentant :
un récipient (1) pour réceptionner les produits alimentaires (8) et
un espace de réchauffage fermé (2) adjacent au récipient (1), lequel est couplé thermiquement au récipient (1) par l'intermédiaire d'une paroi thermoconductrice commune (4) tout en étant simultanément séparé hermétiquement de celui-ci,
l'espace de réchauffage (2) présentant une première chambre (5) et une deuxième chambre (6) qui sont séparées par une paroi perméable à la vapeur d'eau (7),
un mélange de substances (9) se trouvant dans la première chambre (5), lequel produit de la chaleur dans le cadre d'une réaction chimique exothermique en cas d'apport d'eau, de la vapeur d'eau étant formée, et
une zéolithe (10) se trouvant dans la deuxième chambre (6), laquelle peut absorber l'eau arrivant via la paroi perméable à la vapeur d'eau (7) à partir de la première chambre (5) en produisant de la chaleur.

2. Dispositif transportable pour réchauffer des produits alimentaires selon la revendication 1, **caractérisé en ce que** la paroi thermoconductrice (4) se trouve au moins sur une partie du dessous du récipient (1).

3. Dispositif transportable pour réchauffer des produits alimentaires selon la revendication 1 ou 2, **caractérisé en ce que** la paroi thermoconductrice (4) comprend une paroi métallique.

4. Dispositif transportable pour réchauffer des produits alimentaires selon l'une des revendications 1 - 3, **caractérisé en ce que** la deuxième chambre (6) est disposée au-dessus d'au moins une partie de la première chambre (5) de manière à ce que le dessous de la deuxième chambre (6) se trouve au-dessus du mélange réactionnel se formant dans la première chambre (5) après l'apport de l'eau.

5. Dispositif transportable pour réchauffer des produits alimentaires selon la revendication 4, **caractérisé en ce que** la deuxième chambre (6) est disposée sous le récipient (1) et la première chambre (5) sous la deuxième chambre (6), et **en ce que** la première chambre (5), la deuxième chambre (6) et un fond du récipient (1) formant la paroi thermoconductrice (4) présentent une extension horizontale sensiblement identique et **en ce que** la première chambre (5) et la deuxième chambre (6) présentent une hauteur de construction de l'ordre d'environ 3 à 30% des dimensions extérieures du fond du récipient (1).

6. Dispositif transportable pour réchauffer des produits alimentaires selon la revendication 4, **caractérisé en ce que** la deuxième chambre (6) est disposée en forme d'anneau au-dessus de la première chambre (5) de manière à ce que la première chambre (5) et la deuxième chambre (6) se jouxtent, la première chambre (5) au niveau d'une zone centrale et la deuxième chambre (6) au niveau d'une zone annulaire entourant la zone centrale, au niveau d'un fond du récipient (1) formant la paroi thermoconductrice (4).

7. Dispositif transportable pour réchauffer des produits alimentaires selon l'une des revendications 1 - 6, **caractérisé en ce que** la paroi perméable à la vapeur d'eau (7) est formée par un tissu textile, en particulier par un non-tissé.

8. Dispositif transportable pour réchauffer des produits alimentaires selon la revendication 7, **caractérisé en ce que** le tissu textile de la paroi perméable à la vapeur d'eau (7) est muni d'un revêtement imperméable à l'eau, ou est rendu hydrophobe, du côté tourné vers la première chambre (5).

9. Dispositif transportable pour réchauffer des produits alimentaires selon l'une des revendications 1 - 8, **caractérisé en ce que** l'on prévoit une troisième chambre (15) contenant de l'eau, laquelle est séparée de la première et de la deuxième chambre (5, 6), un dispositif (14, 16, 17, 18) pour l'établissement d'une liaison amenant l'eau de la troisième chambre (15) dans la première chambre (6) étant prévu.

10. Dispositif transportable pour réchauffer des produits alimentaires selon la revendication 9, **caractérisé en ce que** la troisième chambre (15) est disposée de manière adjacente à la première chambre (5) et de manière séparée par une paroi étanche à l'eau, et **en ce que** le dispositif (14, 16, 17, 18) pour établir une liaison amenant l'eau de la troisième chambre (15) dans la première chambre (5) comprend un dispositif (18) pour former une ouverture dans la paroi étanche à l'eau.

11. Dispositif transportable pour réchauffer des produits alimentaires selon l'une des revendications 1 - 10, **caractérisé en ce qu'**une paroi extérieure de la première chambre (5) présente une ouverture refermable (12 ; 19) pour l'amenée d'eau.

12. Dispositif transportable pour réchauffer des produits alimentaires selon la revendication 11, **caractérisé en ce que** l'ouverture refermable (12 ; 19) présente une soupape à fermeture automatique (13) en un matériau élastique.

13. Dispositif transportable pour réchauffer des produits alimentaires selon l'une des revendications 1 - 12, **caractérisé en ce que**, en cas d'apport d'eau, le mélange de substances (9) produit d'autres gaz de réaction, mise à part la vapeur d'eau, dans le cadre d'une réaction chimique exothermique, la paroi perméable à la vapeur d'eau (7) étant également perméable à ces gaz de réaction et les gaz de réaction étant également absorbés par la zéolithe (10).

14. Dispositif transportable pour réchauffer des produits alimentaires selon l'une des revendications 1 - 13, **caractérisé en ce que** le mélange de substances (9) dans la première chambre (5) contient de l'oxyde de calcium.

15. Dispositif transportable pour réchauffer des produits alimentaires selon la revendication 14, **caractérisé en ce que** le mélange de substances (9) dans la première chambre (5) contient additionnellement de la poudre ou des granulés d'aluminium.

16. Dispositif transportable pour réchauffer des produits alimentaires selon la revendication 15, **caractérisé en ce que** le mélange de substances (9) dans la première chambre (5) contient additionnellement du carbonate de sodium ou de carbonate de potassium.

17. Dispositif transportable pour réchauffer des produits alimentaires selon l'une des revendications 1 - 16, **caractérisé en ce que** l'espace de réchauffage (2), et au moins une partie du récipient (1) en jonction avec, sont entourés par une paroi d'isolation thermique (11).
